**Europäisches Patentamt**

**European Patent Office**

**Office européen des brevets**

(11) Veröffentlichungsnummer: **0 310 916**
**A2**

## (12) EUROPÄISCHE PATENTANMELDUNG

(21) Anmeldenummer: **88115876.0**

(22) Anmeldetag: **27.09.88**

(51) Int. Cl.⁴: **C01B 33/28** , **C08G 18/08**

(30) Priorität: **07.10.87 DE 3733903**

(43) Veröffentlichungstag der Anmeldung:
**12.04.89 Patentblatt 89/15**

(84) Benannte Vertragsstaaten:
**CH DE FR GB LI**

(71) Anmelder: **BAYER AG**
**Konzernverwaltung RP Patentabteilung**
**D-5090 Leverkusen 1 Bayerwerk(DE)**

(72) Erfinder: **Puppe, Lothar, Dr.**
**Am Weiher 10 A**
**D-5093 Burscheid(DE)**
Erfinder: **Mengel, Manfred, Dr.**
**Bergstrasse 54 A**
**D-5068 Odenthal(DE)**

(54) **Verfahren zur Herstellung eines Zeolith-Pulvers.**

(57) Verfahren zur Herstellung eines kristallinen zeolithischen Molekularsiebs vom Typ A durch Kristallisation von $Na_2O$-, $K_2O$-, CaO-und/oder MgO-, $Al_2O_3$-, $SiO_2$- und $H_2O$-haltigen Reaktionsmischungen, wobei die Fällung und die Kristallisation der Alumosilikatgele im Temperaturbereich von 50 bis 105 °C in Gegenwart eines im wesentlichen röntgenamorphen Natrium-Alumosilikatgels erfolgt und die $K_2O$- und CaO- bzw. MgO-Komponenten als Kalium- bzw. Calcium- und/oder Magnesiumverbindungen vorliegen und daß nach Ende der Kristallisation die Aufarbeitung in der Weise erfolgt, daß das fertige Zeolithpulver einen pH-Wert (nach DIN 53 200) von ≦11 aufweist.
Verwendung der hergestellten Zeolithpulver in nichtzellingen Polyurethansystemen.

EP 0 310 916 A2

## Verfahren zur Herstellung eines Zeolith-Pulvers

Die vorliegende Erfindung betrifft ein Verfahren zur Herstellung von Kalium-Calcium-haltigem Zeolith A-Molekularsieb, das sich insbesondere als Trockenmittel für nichtzellige Polyurethansysteme eignet.

Als Molekularsiebe werden im allgemeinen Zeolithe bezeichnet, welche ein starres dreidimensionales anionisches Gitter besitzen, das von innerkristallinen Hohlräumen durchzogen ist. Die Zugänge zu diesen Hohlräumen, auch Poren genannt, haben einen einheitlichen Durchmesser von z.B. 3 bis 10 Å. Im hydratisierten Zustand enthalten diese Kanäle Wasser, welches durch Erhitzen kontinuierlich entfernt werden kann, wobei das Kristallgitter sich nicht wesentlich verändert. Die "aktiven" (d.h. wasserfreien) Zeolithe haben eine große Adsorptionsaffinität für Moleküle, deren Durchmesser kleiner als die Porenquerschnitte sind. Aufgrund der einheitlichen Porendurchmesser und der sehr hohen Dispersionskräfte erfolgt die Adsorption sehr selektiv. Hierdurch ergibt sich ein sehr weites Anwendungsgebiet für die Trennung, Reinigung und Trocknung von Gasen und Flüssigkeiten.

Die Zeolithe lassen sich aus $SiO_4$- bzw. $AlO_4$-Tetraedern aufbauen. Die dabei auftretende überschüssige negative Ladung der $AlO_4$-Tetraeder wird durch ein- bzw. mehrwertige Kationen ausgeglichen.

Zeolith A ist ein synthetisches kristallines Alumosilikat, das durch folgende Formel dargestellt werden kann:

$$0.9 \ (\pm \ 0.2)Me_{2/n}O \cdot Al_2O_3 \cdot 1.85 \ (\pm 0.2) \ SiO_2 \cdot y \ H_2O$$

Hierin bedeutet Me ein Metall, insbesondere ein Alkali-oder Erdalkalimetall, n die Wertigkeit von Me und y eine Molzahl bis zu 4,5 je nach Hydratisierung des Kristallinen Zeoliths.

Die Eigenschaft und die Verfahren zur Herstellung von Kristallinem Zeolith A sind in zahlreichen Publikationen ausführlich beschrieben worden (wie z.B. DE-PS 1 038 015, DE-PS 1 038 017 und D.W. Breck "Zeolite Molecular Sieves", J. Wiley, New York 1974). Die übliche Syntheseform des Zeoliths A enthält Natrium als Kation. Doch läßt sich das in der Syntheseform vorhandene Natriumion durch zahlreiche andere ein- bzw. mehrwertige Kationen austauschen (z.B. $Li^+$, $K^+$, $NH_4^+$, $Mg^{2+}$, $Ca^{2+}$, $Ba^{2+}$, $Ag^+$, $Tl^+$, $Ni^{2+}$, $Co^{2+}$, $Cu^{2+}$, $Mn^{2+}$, $Zn^{2+}$, usw.).

Hierbei werden die Porenquerschnitte und somit die Eigenschaften des Zeoliths hinsichtlich Adsorption je nach eingetauschtem Kation aufgrund unterschiedlicher Ladungszahl der Kationen bzw. Kationenradien verändert.

Wie schon vorher erwähnt, ist die übliche Syntheseform des Zeoliths A die Natriumform, d.h. Zeolith A entsteht vorwiegend nur im System $Na_2O$-, $Al_2O_3$-, $SiO_2$ und $H_2O$ unter üblichen hydrothermalen Bedingungen für die Zeolith-A-Synthese (s. D.W. Breck, Zeolite Molecular Sieves, John Wiley & Sons, New York 1974, S. 289). Jeglicher Zusatz von anderen Kationen bzw. ein vollständiger Ersatz der Natriumionen in dem oben aufgeführten Vierkomponenten-Gemisch durch andere Kationen verzögert, erschwert oder verhindert völlig die Bildung des kristallinen Zeoliths A.

Von besonderem technischen Interesse sind neben der Natriumform die Calcium- bzw. Kaliumform des Zeoliths A. Im Falle des Calciums, das durch einen einfachen Ionenaustausch, wie er in der DE-PS 1 038 016 ausführlich beschrieben worden ist, anstelle des Natriums in den Zeolith eingebracht werden kann, wird die Porenöffnung von 4 Å auf 5 Å aufgeweitet, wenn mindestens 30 % der Natriumionen durch Calciumionen substituiert werden. Hierdurch werden z.B. n/iso-Trennungen von Kohlenwasserstoff-Gemischen möglich.

Wird jedoch Kalium anstelle von Natrium im Zeolith A eingetauscht, so werden bei einem Austausch von mindestens 30 % der Natriumionen die Poren von 4 Å auf 3 Å Durchmesser verkleinert. So wird z.B. von K/Na-Zeolith A kein Ethylen mehr adsorbiert; daher eignet sich dieser ionenausgetauschte 3 Å-Zeolith z.B. zur Intensivtrocknung von Olefinen.

Weiterhin ist bekannt aus der DE-AS 1 928 129, Kaliumausgetauschten Zeolith A in lösungsmittelfreien Polyurethanbeschichtungen einzusetzen. Aus den Rohstoffen der Polyurethanchemie, den Isocyanaten und Polyolen, lassen sich lösungsmittelfreie Beschichtungen und Gießharze herstellen, die sich insbesondere durch ihre schnelle Aushärtung, hohe Widerstandsfähigkeit gegen äußere Einwirkungen und große Elastizität auszeichnen.

Wesentlichen Einfluß auf die Qualität der Polyurethanprodukte hat die Menge des mit den eingesetzten Polyalkoholen, Füllstoffen, Pigmenten usw. eingebrachten Wassers. Diese Feuchtigkeit kann mit den Isocyanatgruppen des Reaktionsgemisches unter Bildung von Kohlendioxid reagieren. Das Kohlendioxid tritt in Form von Blasen auf, die den Polyurethan-Kunststoff zellenartig durchsetzen. Bei lösungsmittelfreien Polyurethan-Beschichtungen, -Dichtmassen, -Klebstoffen und -Gießharzen ist dieser Schaumeffekt unerwünscht und sogar schädlich, weil einerseits die mechanischen Eigenschaften der zelligen Polymeren nicht den geforderten Werten entsprechen und andererseits die geschäumten Produkte aus den Formen hervoquellen. Besonders bei Beschichtungen, die in Schichtdicken von etwa 0,3 bis 3 mm aufgetragen werden, stellt man darüber hinaus hohe Ansprüche an die Qualität der Oberfläche, die frei von Poren und durch keine Blasen in ihrer Glätte gestört sein sollten.

Der Einsatz von 3 Å-Zeolith A in dünnen Polyurethanschichten bewirkt einen niedrigen Restporengehalt auch bei hohen Luftfeuchtigkeiten (über 50 % bis nahe an 100 %), so daß ein ausreichender Korrosionsschutz bei der praktischen Anwendung gewährleistet ist. Darüber hinaus zeigen die Schichten eine bedeutend glattere und glänzendere Oberfläche als die mit 4 Å-Zeolithen herstellbaren.

Der 3 Å-Zeolith A ist beispielsweise durch eine bekannte Ionenaustauschreaktion aus dem bisher am meisten gebräuchlichen NA-Zeolith A mit der Porenweite 4 Å und der mittleren Zusammensetzung von etwa $(0.9 \pm 0.2)$ $Na_2O \cdot Al_2O_3 \cdot 1.85$ $(\pm 0.2)$ $SiO_2 \cdot y$ $H_2O$ zu erhalten, indem man den Natrium-Zeolith A mit einer wäßrigen Lösung vom Kaliumchlorid oder einem anderen Kaliumsalz behandelt, das ausgetauschte Produkt durch Filtration, Waschen und Trocknen von der Lauge befreit und beispielsweise durch Erhitzen auf Temperaturen von etwa 400°C aktiviert.

Erfahrungsgemäß hat sich gezeigt, daß einzelne Polyurethanrezepturen für lösungsmittelfreie Beschichtungen empfindlich hinsichtlich einer Topfzeitverkürzung reagieren. Ein Verkürzung der Topfzeit gegenüber den Werten ohne Zeolith-Zusatz beeinträchtigt die Verarbeitbarkeit.

Die technische Herstellung des für lösungsmittelfreie Polyurethanschichten geeigneten Kalium-Zeolith A erfordert mehrere Verfahrensschritte und daher einen erheblichen Zeitaufwand und erhöhte Kosten.

In der DE-AS 1 218 417 und DE-OS 1 592 280 werden nun Verfahren geschildert, bei denen man einen Kalium-haltigen Zeolith A direkt aus der Synthese ohne einen aufwendigen Austauschschritt erhalten kann. Die Einsparung des Ionenaustauschschrittes wird hierbei durch eine Verlängerung der Kristallisationszeit auf mindestens 8 Stunden und bis zu 48 Stunden erkauft.

In der US-PS 4 534 947 wird ein Verfahren beansprucht, das durch den Zusatz von Keimlösungen und Verwendung von Kaliwasserglas, Kalilauge oder Kaliumaluminat eine kürzere Synthesezeit erlaubt.

Die vorliegende Erfindung betrifft nun ein Verfahren zur Herstellung eines kristallinen zeolithischen Molekularsiebs vom Typ Zeolith A, der die folgende oxidische Zusammensetzung aufweist:

$$x\ Na_2O \cdot y\ K_2O \cdot z Me^{II}O \cdot 1.85\ (\pm 0,2)\ SiO_2 \cdot n$$

$H_2O$

$Me^{II} = Ca$ bzw. $Mg$

wobei x im Bereich von 0,7 bis 0,05, y im Bereich von 0,05 bis 0,7, z im Bereich von 0,05 bis 0,5 und n bis 4,5 liegen kann und x + y + z einen Wert von 1,0 ± 0,2 einnehmen kann, durch Kristallisation von $Na_2O$-, $K_2O$-, $CaO$- und/oder $MgO$, $Al_2O_3$-, $SiO_2$- und $H_2O$-haltigen Reaktionsmischungen und ist dadurch gekennzeichnet, daß die Fällung und die Kristallisation der Alumosilikatgele im Temperaturbereich von 50 bis 105°C, bevorzugt 70 bis 100°C in Gegenwart eines im wesentlichen röntgenamorphen Natrium-Alumosilikatgels erfolgt und die $K_2O$- und $CaO$-und/oder $MgO$-Komponenten als Kalium- bzw. Calcium-und/oder Magnesiumverbindungen vorliegen sowie nach Ende der Kristallisation die Aufarbeitung in der Weise erfolgt, daß das fertige kristalline und aktive Zeolith-Pulver einen pH-Wert, gemessen nach DIN 53 200 von ≤11.0 aufweist, bevorzugt ≤10.

Das verwendete, im wesentlichen röntgenamorphe Natrium-Alumosilikat-Gel braucht nach seiner Herstellung nicht einem vorhergehenden Aufarbeitungsschritt unterworfen zu werden, sondern man kann es direkt aus der Mischung als wäßrige Suspension einsetzen.

Überraschenderweise hat sich gezeigt, daß man ein Zeolith-Pulver mit guter Topfzeitstabilität erhält, wenn die Synthese in Gegenwart von Kalium- und Calcium-und/oder Magnesiumverbindungen durchgeführt wird. Das Material, das man erhält, wenn nur in Gegenwart von Kaliumverbindungen synthetisiert wird, beeinflußt in bestimmten empfindlichen Polyurethansystemen die Topfzeiten.

Als Salze bzw. Verbindungen eignen sich z.B. Kaliwasserglas, Kaliumaluminat, $KOH$, $K_2SO_4$, $KCl$, $KNO_3$, $K_2CO_3$, $KBr$, $KF$, $K_2HPO_4$ bzw. $CaCl_2$, $Ca(NO_3)_2$, $CaBr_2$, $CaHPO_4$, $Ca(OH)_2$; bzw. $MgCl_2$, $Mg(NO_3)_2$, $MgSO_4$, $MgBr_2$ u.a.

Die erfindungsgemäß hergestellten Zeolithpulver können in gleicher Weise wie z.B. in DE-AS 1 928 129 beschrieben, in Polyurethankunststoffen bzw. -Überzügen eingesetzt werden.

Im folgenden wird das erfindungsgemäße Verfahren anhand von Beispielen weiter erläutert.

## Beispiele

Herstellung des Natrium-Alumosilikatgels (Suspension)

300 ml Natriumaluminat werden unter Rühren mit 180 ml Natronwasserglas versetzt. Das ausgefallene Natriumalumosilikat-Gel wird bei 28°C mindestens 72 Stunden gerührt und kann anschließend direkt als Suspension verwendet werden. Das Alumosilikatgel mit der ungefähren Zusammensetzung $Na_2O \cdot Al_2O_3 \cdot 2 SiO_2 \cdot x H_2O$ ist im wesentlichen röntgenamorph und die Suspension hat einen Festoffgehalt von ca. 300 g/Liter.

Beispiel 1

3,06 l Natronwasserglas werden zusammen mit 6,9 l Wasser und 2,1 kg KCl sowie 0,3 kg CACl₂ auf 85° C unter Rühren aufgeheizt. Nach Erreichen der Temperatur gibt man 460 ml Gel aus Suspension A hinzu und rührt zur Homogenisierung ca. 10 Minuten. In diese Mischung läßt man 4,8 l Natriumaluminatlösung einfließen. Das entstandene Alumosilikatgel (Molverhältnisse im Ansatz - ohne Berücksichtigung des zugesetzten Natrium-Alumosilicatgels:
$SiO_2/Al_2O_3 = 2.0$; $(Na_2O + K_2O)/SiO_2 = 1.4$; $CaO/Al_2O_3 = 0.26$; $H_2O/Na_2O + K_2O) = 30$ und $K_2O/(K_2O + Na_2O) = 0.4$) wird unter Rühren bei 85° C innerhalb von 6 Stunden kristallisiert. Der fertige Zeolith wird von der Mutterlauge abgetrennt und solange mit entionisiertem Wasser gewaschen, bis der pH-Wert im ablaufenden Waschwasser ≦10 beträgt und das Waschwasser kein Kaliumionen mehr enthält. Anschließend wird mit Wasser eine Suspension mit einem Feststoffgehalt von ca. 250 g/l eingestellt und in einer Rührwerkskugelmühle ca. 15 Minuten gemahlen. Danach werden die Mahlkugeln abgetrennt und der Zeolith erneut soweit ausgewaschen bis der pH-Wert im ablaufenden Wasser einen Wert ≦9 erreicht.

Das bei 100° C getrocknete und 3 Stunden bei 500° C aktivierte Reaktionsprodukt zeigt eine Wasseradsorptionskapazität von 24,1 g $H_2O$/100 g Adsorbens bei 20° C und 13.3 mbar Wasserdampfpartialdruck.

Die chemische Analyse weist folgende Werte auf:

38,0 % $SiO_2$; 33,0 % $Al_2O_3$; 10,0 % $Na_2O$; 9,0 % $K_2O$; 4,9 % CaO, dies entspricht folgender oxidischer Zusammensetzung:

0.3 $K_2O \cdot 0.5 Na_2O \cdot 0,25 CaO \cdot Al_2O_3 \cdot 1.95 SiO_2$.

Beim Einsatz dieses Materials in verschiedenen nichtzelligen Polyurethansystemen ist keinerlei Beeinflussung der Topfzeiten zu beobachten. Die Oberflächen von mit diesen Systemen hergestellten Beschichtungen sind eben und glänzend und zeigen keinerlei Reaktionsblasen.

Beispiel 2

1,5 l Natronwasserglas werden zusammen mit 3,45 l Wasser und 0,80 kg KCl sowie 0,12 kg $CaCl_2$ auf 90° C unter Rühren aufgeheizt. Nach Erreichen der Temperatur gibt man 150 ml Gel aus Suspension A hinzu und rührt zur Homogenisierung ca. 10 Minuten. In diese Mischung läßt man 2,4 l Natriumaluminatlösung einfließen:

Das entstandene Alumosilikatgel (Molverhältnisse im Ansatz ohne Berücksichtigung des zugesetzten Natriumalumosilikatgels: $SiO_2/Al_2O_3 = 2.0$; $(Na_2O + K_2O)/SiO_2 = 1.5$; $CaO/Al_2O_3 = 0.2$; $H_2O/(Na_2O + K_2O) = 30$ und $K_2O/(K_2O + Na_2O) = 0.35$) wird unter Rühren bei 90° C innerhalb von 5 Stunden kristallisiert. Der fertige Zeolith wird von der Mutterlauge abgetrennt und solange mit entionisiertem Wasser ausgewaschen bis der pH-Wert im ablaufenden Waschwasser ≦10 beträgt und das Waschwasser keine Kaliumionen mehr enthält. Anschließend wird mit Wasser eine Suspension mit einem Feststoffgehalt von ca. 250 g/l eingestellt und in einer Rührwerkskugelmühle ca. 15 Minuten gemahlen. Danach werden die Mahlkugeln abgetrennt und der Zeolith erneut gewaschen bis der pH-Wert im ablaufenden Wasser unterhalb 9 gesunken ist.

Das bei 100° C getrocknete und 3 Stunden bei 500° C aktivierte Reaktionsprodukt zeigte eine Wasseradsorptionsleistung von 24.4 g $H_2O$/100 g Adsorbens bei 20° C und 13.3 mbar Wasserdampfpartialdruck.

Die chemische Analyse weist folgende Werte auf:

38,4 % $SiO_2$; 34,2 % $Al_2O_3$; 10,0 % $Na_2O$; 8,9 % $H_2O$; 3,2 % CaO; dies entspricht folgender molarer oxidischer Zusammensetzung:

0,29 $K_2O \cdot 0,40 Na_2O \cdot 0,17 CaO \cdot Al_2O_3 \cdot 1.92 SiO_2$

Beim Einsatz dieses Materials in verschiedenen nichtzelligen Polyurethansystemen ist keinerlei Beeinflussung der Topfzeiten zu beobachten. Die Oberflächen von mit diesen Systemen hergestellten Beschichtungen sind eben und glänzend und zeigen keinerlei Reaktionsblasen.

Beispiel 3

0,92 l Natronwasserglas werden zusammen mit 2,07 l Wasser und 500 g KCl sowie 80 g $MgCl_2$ auf 90° C unter Rühren aufgeheizt. Nach Erreichen der Temperatur gibt man 75 ml Gel aus Suspension A hinzu und rührt zur Homogenisierung ca. 10 Minuten. In diese Mischung läßt man 1,5 l Natriumaluminatlösung einfließen. Das entstandene Alumosilikatgel (Molverhältnis im Ansatz ohne Berücksichtigung des zugesetzten Natrium-Alumosilikatgels: $SiO_2/Al_2O_3 = 2,0$; $(Na_2O + K_2O)/SiO_2 = 1,4$; $MgO/Al_2O_3 = 0.30$; $H_2O/(Na_2O + K_2O) = 30$ und $K_2O/(K_2O + Na_2O) = 0,4$ wird unter Rühren bei 90°C innerhalb von 6 Stunden kristallisiert. Der fertige Zeolith wird von der Mutterlauge abgetrennt und solange mit entionisiertem Wasser gewaschen, bis der pH-Wert im ablaufenden Waschwasser ≤10 beträgt und das Waschwasser keine Kaliumionen mehr enthält. Anschließend wird mit Wasser eine Suspension mit einem Feststoffgehalt von ca. 250 g/l eingestellt und in einer Rührwerkskugelmühle ca. 15 Minuten gemahlen. Danach werden die Mahlkugeln abgetrennt und der Zeolith erneut soweit ausgewaschen bis der pH-Wert im ablaufenden Wasser einen Wert ≤9 erreicht.

Das bei 100°C getrocknete und 3 Stunden bei 500°C aktivierte Reaktionsprodukt zeigt einen Wasseradsorptionswert von 23,8 g $H_2O$/100 g Adsorbens bei 20°C und 13,3 mbar Wasserdampfpartialdruck.

Die chemische Analyse weist folgende Werte auf:

38,4 % $SiO_2$; 34,2 % $Al_2O_3$ 9,9 % $K_2O$ 3,9 % $MgO$ und 10 % $Na_2O$, dies entspricht folgender oxidischer Zusammensetzung:

0,31 $K_2O$ · 0,48 $Na_2O$ · 0,29 $MgO$ · $Al_2O_3$ · 1,91 $SiO_2$

Beim Einsatz dieses Materials in verschiedenen nichtwelligen Polyurethansystemen ist keine Beeinflussung der Topfzeiten zu beobachten.

## Ansprüche

1. Verfahren zur Herstellung eines kristallinen zeolithischen Molekularsiebs vom Typ A durch Kristallisation von $Na_2O$-, $K_2O$-, $CaO$- und/oder $MgO$-, $Al_2O_3$-, $SiO_2$- und $H_2O$-haltigen Reaktionsmischungen, dadurch gekennzeichnet, daß die Fällung und die Kristallisation der Alumosilikatgele im Temperaturbereich von 50 bis 105°C in Gegenwart eines im wesentlichen röntgenamorphen Natrium-Alumosilikatgels erfolgt und die $K_2O$- und $CaO$- bzw. $MgO$-Komponenten als Kalium- bzw. Calcium- und/oder Magnesiumverbindungen vorliegen und daß nach Ende der Kristallisation die Aufarbeitung in der Weise erfolgt, daß das fertige Zeolithpulver einen pH-Wert (nach DIN 53 200) von ≤11 aufweist.

2. Verfahren nach Anspruch 1, dadurch gekennzeichnet, daß die Fällung bei Temperaturen von 70 bis 100°C erfolgt.

3. Verfahren nach einem der Ansprüche 1 oder 2, dadurch gekennzeichnet, daß die $K_2O$- und $CaO$- und/oder $MgO$-Komponenten als Salze vorliegen.

4. Verwendung der nach einem der Ansprüche 1 bis 3 hergestellten Zeolithpulver in nichtzelligen Polyurethansystemen.